# EUROPÄISCHE PATENTANMELDUNG

(11) **EP 1 008 766 A2**
(43) Veröffentlichungstag der Anmeldung: **14.06.2000**
(21) Anmeldenummer: 99123402.2
(22) Anmeldetag: 24.11.1999
(51) Int. Cl.: F16B 5/02

(54) **Verfahren zur Befestigung eines Bauteils**

(30) Priorität: 11.12.1998 DE 19857175
(71) Anmelder: Mannesmann VDO Aktiengesellschaft, 60388 Frankfurt am Main (DE)
(72) Erfinder: Landsmann, Nils, 45721 Haltern (DE)
(74) Vertreter: Klein, Thomas, Dipl.-Ing.

(57) **Zusammenfassung**

Ein Bauteil (2) wird nach dem Ausreißen eines zu seiner Befestigung vorgesehenen Gewindebolzens aus einer Blechwand (1) mittels einer Senkkopfschraube (18) an der Blechwand (1) befestigt. Hierzu wird mittels eines Gesenkwerkzeugs der Rand des Loches, welches durch das Ausreißen des Gewindebolzens entstand, zur Seite des zu befestigenden Bauteils (2) hin zu einem Konus (16) verformt. Anschließend wird die Senkkopfschraube (18) mit ihrem konischen Kopf (17) in den Konus (16) der Blechwand (1) eingesetzt.

## Beschreibung

Die Erfindung betrifft ein Verfahren zur Befestigung eines Bauteils an einer Blechwand, insbesondere einer Spritzwand eines Kraftfahrzeugs, welche aufgrund eines Ausreißens eines für die Befestigung des Bauteils ursprünglich vorgesehenen Gewindebolzens eine in etwa runde Ausnehmung aufweist.

Zur Befestigung von Bauteilen an einer Blechwand werden oftmals Gewindebolzen mit einer Stirnseite auf diese Blechwand geschweißt, die beispielsweise jeweils durch eine Öse des zu befestigenden Bauteils greifen und auf die dann eine Mutter geschraubt wird. Das Festschrauben der Mutter erfolgt bei der Erstmontage üblicherweise mit einem Drehmomentenschlüssel mit einem der Festigkeit der Schweißverbindung des Gewindebolzens entsprechenden Drehmoment. Nach einer Demontage zum Zwecke einer Reparatur werden diese Bauteile jedoch oftmals ohne einen solchen Drehmomentenschlüssel wieder montiert, wobei oftmals eine so hohe Kraft aufgebracht wird, dass der Gewindebolzen aus der Blechwand herausgerissen wird. Es entsteht dann in der Blechwand ein in etwa rundes Loch, so dass keine unmittelbare Befestigungsmöglichkeit mehr gegeben ist.

In einem solchen Fall wird man zunächst daran denken, durch das Loch von der dem Bauteil abgewandten Seite her eine Kopfschraube zu stecken, so dass man das Bauteil mittels dieser Kopfschraube und einer aufgeschraubten Mutter befestigen kann. Oftmals werden gegen eine Blechwand jedoch von beiden Seiten Bauteile angeschraubt, die unmittelbar gegen die Blechwand anliegen. Dann fehlt der Platz für den Kopf der Kopfschraube. Aus dem gleichen Grunde kann man keinen Niet vorsehen, da dann ebenfalls die durch den Nietkopf gebildete Erhebung auf der Blechwand stört.

Der Erfindung liegt das Problem zugrunde, ein Verfahren der eingangs genannten Art derart auszubilden, dass nach dem Ausreißen eines Gewindebolzens eine Befestigung des Bauteils möglich wird, ohne dass auf der dem Bauteil abgewandten Seite auf der Blechwand eine Erhebung entsteht.

Dieses Problem wird erfindungsgemäß dadurch gelöst, dass mittels eines Gesenkwerkzeugs der Rand der Ausnehmung zur Seite des zu befestigenden Bauteils hin zu einem Konus verformt und dass anschließend eine Senkkopfschraube mit ihrem konischen Kopf in den Konus der Blechwand eingesetzt wird.

Durch diese Verfahrensweise wird es möglich, einen angeschweißten Gewindebolzen durch eine Schraube zu ersetzen, ohne dass auf der dem zu befestigenden Bauteil gegenüberliegenden Seite der Blechwand eine Erhebung entsteht, die dort bei der Anordnung eines weiteren Bauteils stören würde. Durch den mittels des Gesenkwerkzeugs nach innen eingezogenen, einen Konus bildenden Rand des Loches wird die Senkkopfschraube sehr zuverlässig in Axialrichtung gehalten. In der Praxis hat sich gezeigt, dass sie axial höher belastbar ist als der ursprünglich angeschweißte Gewindebolzen, so dass das Bauteil nach der Reparatur trotz des ausgerissenen Gewindebolzens zuverlässig an der Blechwand gehalten wird. Durch die weitestgehend ebene Oberfläche der dem zu befestigenden Bauteil gegenüberliegenden Seite der Blechwand können hier weitere Bauteile auch in einfacher Weise, z. B. durch einen Dichtring, abgedichtet an der Blechwand angeordnet werden.

Besonders vorteilhaft ist es, wenn auf den Kopf der Senkkopfschraube und/oder den Konus der Blechwand Klebstoff aufgebracht wird. Hierdurch wird die Senkkopfschraube im Konus gehalten, so dass ihr Schaft genau wie ursprünglich der Gewindebolzen senkrecht aus der Blechwand ragt und für den Monteur des Bauteils die gleiche Situation vorliegt, wie sie durch den ursprünglichen Gewindebolzen gegeben war. Bei späteren Reparaturen wird man noch nicht einmal merken, dass der Gewindebolzen durch eine Senkkopfschraube ersetzt wurde. Weiterhin erreicht man durch den Kleber, dass die Blechwand einen dichten Abschluss bildet, was zum Beispiel bei einer Spritzwand eines Kraftfahrzeugs erforderlich ist, damit keine Verbindung zwischen dem Motorraum und Fahrgastraum entsteht.

Die Blechwand wird ausschließlich im Bereich des zu erzeugenden Konus verformt, so dass sie sich nicht insgesamt zu dem zu befestigenden Bauteil hin verbiegen kann, wenn gemäß einer anderen Weiterbildung der Erfindung zur Erzeugung des Konus der Blechwand auf der Seite des zu befestigenden Bauteils eine Matrize des Gesenkwerkzeugs und auf der gegenüberliegenden Seite eine Patrize des Gesenkwerkzeugs angesetzt und die Patrize in die Matrize hineinbewegt wird.

Der zu dem zu befestigenden Bauteil hin gerichtete Konus könnte mit einer beispielsweise hydraulisch oder mit Druckluft arbeitenden Vorrichtung mittels des Gesenkwerkzeugs erzeugt werden. Möglich wäre es auch, die Patrize mittels eines Hammers in die Matrize hineinzutreiben. Oftmals fehlt jedoch der erforderliche Platz für solche Maßnahmen, beispielsweise bei einer Spritzwand in einem Kraftfahrzeug. Vielfach würden auch die durch einen Hammer eingeleiteten Stöße bei an der Blechwand angebrachten Bauteilen Schaden anrichten. Dann ist es vorteilhaft, wenn gemäß einer anderen Weiterbildung der Erfindung eine Patrize und eine Matrize mit jeweils einem koaxialen Durchgangsloch benutzt werden und wenn zum Hineinbewegen der Patrize in die Matrize eine Kopfschraube durch die Patrize und Matrize geführt und anschließend mittels einer Mutter festgezogen wird.

Zur weiteren Verdeutlichung des erfindungsgemäßen Verfahrens wird nachfolgend auf die Zeichnung Bezug genommen. Diese zeigt in
- Fig. 1: einen Teilbereich einer Blechwand mit zwei daran befestigten Bauteilen und einem ausgerissenen Gewindebolzen,
- Fig. 2: einen Teilbereich der Blechwand mit einem Gesenkwerkzeug zum Umformen eines Bereiches der Blechwand,
- Fig. 3: die Anordnung nach Figur 1 im reparierten Zustand.

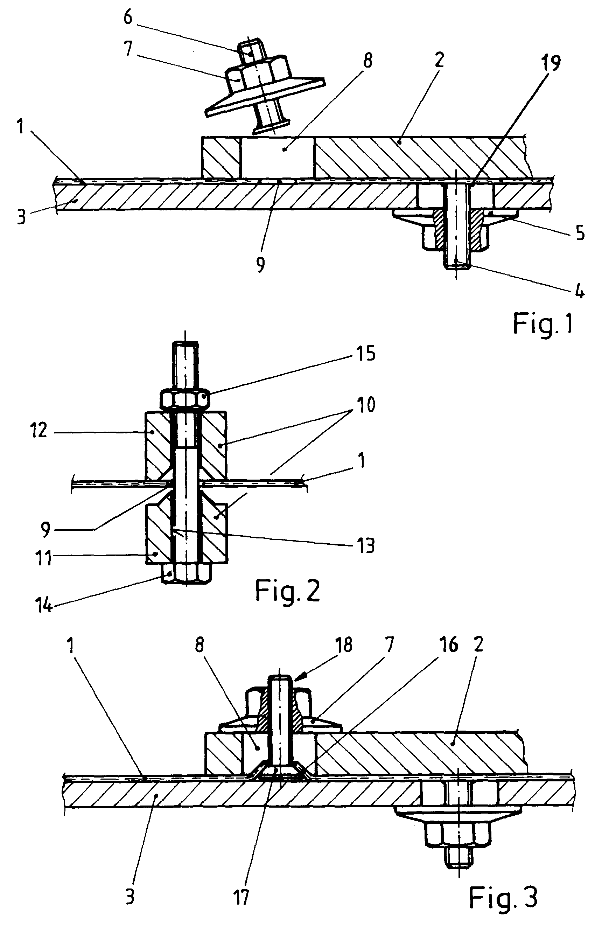

Die Figur 1 zeigt eine Blechwand 1, gegen welche von beiden Seiten her Bauteile 2, 3 anliegen. Beim Bauteil 3 ist zu erkennen, dass dieses durch einen Gewindebolzen 4 und eine Mutter 5 gegen die Blechwand 1 gehalten ist. Dieser Gewindebolzen 4 ist mit seiner Stirnseite auf der Blechwand 1 festgeschweißt (Schweißnaht 19).

Die Figur 1 zeigt weiterhin einen zweiten Gewindebolzen 6 mit einer Mutter 7, der ursprünglich durch eine Öse 8 des Bauteils 2 führte und dadurch das Bauteil 2 mit Hilfe der Mutter 7 gegen die Blechwand 1 hielt. In der dargestellten Position ist der Gewindebolzen 6 jedoch von der Blechwand 1 abgerissen, so dass in der Blechwand 1 ein in etwa rundes Loch 9 entstand.

Die Figur 2 zeigt ein Gesenkwerkzeug 10, welches eine Patrize 11 und eine Matrize 12 aufweist. Das Gesenkwerkzeug 10 hat ein koaxiales Durchgangsloch 13, durch welches eine Kopfschraube 14 geführt ist. Zieht man eine auf die Kopfschraube 14 geschraubte Mutter 15 fest, dann bewegt sich die Patrize 11 mit ihrem erhabenen Teil in die als Hohlform ausgebildete Matrize 12 hinein und verformt den Rand des Loches 9 der Blechwand 1 zu einem in Figur 3 gezeigten Konus 16, der in die Öse 8 hineinragt.

Die Figur 3 lässt erkennen, dass der Konus 16 so bemessen ist, dass nach dem Entfernen des Gesenkwerkzeuges 10 ein Kopf 17 einer Senkkopfschraube 18 mit der Blechwand 1 bündig in den Konus 16 hineinpasst und die Senkkopfschraube 18 den Geweindebolzen 6 ersetzt. Mittels der Mutter 7 kann man anschließend das Bauteil 2 festschrauben. Da der Kopf 17 nicht vorspringt, behindert er nicht die Befestigung des Bauteils 3.

## Patentansprüche

1. Verfahren zur Befestigung eines Bauteils an einer Blechwand, insbesondere einer Spritzwand eines Kraftfahrzeugs, welche aufgrund eines Ausreißens eines für die Befestigung des Bauteils ursprünglich vorgesehenen Gewindebolzens eine in etwa runde Ausnehmung aufweist, **dadurch gekennzeichnet**, dass mittels eines Gesenkwerkzeugs (10) der Rand der Ausnehmung (9) zur Seite des zu befestigenden Bauteils (2) hin zu einem Konus (16) verformt und dass anschließend eine Senkkopfschraube (18) mit ihrem konischen Kopf (17) in den Konus (16) der Blechwand (1) eingesetzt wird.

2. Verfahren nach Anspruch 1, **dadurch gekennzeichnet**, dass auf den Kopf (17) der Senkkopfschraube (18) und/oder den Konus (16) der Blechwand (1) Klebstoff aufgebracht wird.

3. Verfahren nach Anspruch 1 oder 2, **dadurch gekennzeichnet**, dass zur Erzeugung des Konus (16) der Blechwand (1) auf der Seite des zu befestigenden Bauteils (2) eine Matrize (12) des Gesenkwerkzeugs (10) und auf der gegenüberliegenden Seite eine Patrize (11) des Gesenkwerkzeugs (10) angesetzt und die Patrize (11) in die Matrize (12) hineinbewegt wird.

4. Verfahren nach Anspruch 3, **dadurch gekennzeichnet**, dass eine Patrize (11) und eine Matrize (12) mit jeweils einem koaxialen Durchgangsloch (13) benutzt werden und dass zum Hineinbewegen der Patrize (11) in die Matrize (12) eine Kopfschraube (14) durch die Patrize (11) und Matrize (12) geführt und anschließend mittels einer Mutter (15) festgezogen wird.
